# EUROPEAN PATENT APPLICATION

(11) **EP 4 776 560 A1**
(43) Date of publication of application: **15.07.2026**
(21) Application number: 26151351.9
(22) Date of filing: 12.01.2026
(51) Int. Cl.: H04L 9/00, G06N 3/02

(54) **METHOD AND APPARATUS FOR MODEL INFERENCE USING CRYPTOGRAPHIC NEURAL NETWORK**

(30) Priority: 10.01.2025 CN 202510045090
(71) Applicant: Zhejiang Ant Misuan Technology Co., Ltd., Hangzhou City, Zhejiang Province 310023 (CN)
(72) Inventor: ZHOU, Zhen, Hangzhou, Zhejiang 310000 (CN); SONG, Jie, Hangzhou, Zhejiang 310000 (CN); TANG, Xin, Hangzhou, Zhejiang 310000 (CN)
(74) Representative: Winter, Brandl - Partnerschaft mbB

(57) **Abstract**

Embodiments of this specification provide a method and an apparatus for model inference using a cryptographic neural network. The cryptographic neural network includes a plurality of linear layers. The method includes: receiving ciphertext data and key data of a user, where the key data is partial data of an evaluation key of a target format, and the evaluation key of the target format includes a plurality of extended ciphertexts; and inputting the ciphertext data into the cryptographic neural network for cryptographic processing, where the cryptographic processing includes: performing, at any target linear layer in the plurality of linear layers, a ciphertext rotation operation by using a first data part corresponding to a first ciphertext level t in the evaluation key, where the first data part includes only partial data of a single extended ciphertext.

## Description

### TECHNICAL FIELD

One or more embodiments of this specification relate to the field of cryptography, and in particular, to a method and an apparatus for model inference using a cryptographic neural network.

### BACKGROUND

Currently, in a highly digitalized background, protecting data security and maintaining personal privacy have become critical challenges, so that an emerging technical field, namely, privacy computing, is further emerged. Through implementation of this technology, data analysis and processing can be performed in an information encrypted state, thereby ensuring secrecy and security of sensitive data in a utilization process. A fully homomorphic encryption (FHE) technology is an important technical means in the field of privacy computing. A high-level data computing task can be completed through this technology in a state in which data is encrypted into a ciphertext, to ensure an accurate and error-free operation and protect privacy of the data. With continuous and in-depth application in the fields such as cloud computing, secure data sharing, and multi-orientation information cooperation platforms, homomorphic encryption is gradually building a bridge, which connects requirements of high-efficient data utilization and strict data protection, and leads the secure computing field to a new development stage.

Cryptographic neural network inference is a very important application scenario of the fully homomorphic encryption (FHE). In this application scenario, after inputted data of a network is encrypted into an FHE ciphertext state through a private key of a data holder, subsequent network operations (convolution, pooling, activation, full connection, and the like) at each layer and final network inference result output are all in a ciphertext state. After an outputted ciphertext is returned to the data holder, an inference result can be obtained through an FHE decryption operation, and an inference calculation party of a network model cannot obtain any information about inference data in the entire process. Cryptographic neural network inference has a huge use in various industries. For example, in the field of medical health, hospitals can predict diseases or recommend treatment solutions by using a cryptographic neural network without leakage of personal information of patients, and in financial services, financial institutions can securely analyze encrypted financial records to perform credit evaluation.

Therefore, an improved solution is expected to improve inference operation performance of the cryptographic neural network.

### SUMMARY

One or more embodiments of this specification describe a solution of performing cryptographic inference using a cryptographic neural network. An evaluation key with a small data amount is used through control of a ciphertext level, thereby improving performance of cryptographic inference.

According to a first aspect, a method for model inference using a cryptographic neural network is provided, where the cryptographic neural network includes a plurality of linear layers, and the method includes:
receiving ciphertext data and key data of a user, where the key data is partial data of an evaluation key of a target format, and the evaluation key of the target format includes a plurality of extended ciphertexts; and
inputting the ciphertext data into the cryptographic neural network for cryptographic processing, where the cryptographic processing includes: performing, at any target linear layer in the plurality of linear layers, a ciphertext rotation operation by using a first data part corresponding to a first ciphertext level t in the evaluation key, where the first data part includes only partial data of a single extended ciphertext.

In an embodiment, a ciphertext item in the ciphertext data includes L basic polynomials corresponding to L basic moduli, a ciphertext item in the extended ciphertext includes L first polynomials corresponding to the L basic moduli and K second polynomials corresponding to K auxiliary moduli, the partial data of the single extended ciphertext is L-t first polynomials and the K second polynomials, and a value of L-t is less than a preset threshold.

Further, in an example, the target linear layer is a convolutional layer, an operation of the target linear layer consumes a 2-level ciphertext level, and the first ciphertext level t is set to cause L-t to be greater than or equal to 3.

In another example, an operation of the target linear layer consumes a 1-level ciphertext level, and the first ciphertext level t is set to cause L-t to be greater than or equal to 2.

According to an implementation, the cryptographic processing includes: performing a bootstrap operation after the target linear layer, where the bootstrap operation is to perform ciphertext level reduction processing by using a second data part corresponding to a second ciphertext level t in the evaluation key.

In an embodiment, the key data transmitted by the user includes only a first data part used by each linear layer and a second data part used for the bootstrap operation.

In a specific example, a quantity K of auxiliary moduli is set to be equal to the preset threshold.

According to an embodiment, before the ciphertext rotation operation is performed, in response to that a ciphertext level inputted into the target linear layer is less than the first ciphertext level t, the ciphertext level is increased to the first ciphertext level t through a ciphertext level increasing operation.

According to an embodiment, before the cryptographic processing, the method further includes: determining ciphertext level consumption of each network layer in the cryptographic neural network; and determining an inputted ciphertext level of each network layer and a position of the bootstrap operation under a target constraint based on the ciphertext level consumption, to cause an inputted ciphertext level of each linear layer to be greater than a preset level threshold, where the target constraint includes that an outputted ciphertext level of each network layer is not greater than a highest ciphertext level.

According to a second aspect, an apparatus for model inference using a cryptographic neural network is provided, where the cryptographic neural network includes a plurality of linear layers, and the apparatus includes:
a receiving unit, configured to receive ciphertext data and key data of a user, where the key data is partial data of an evaluation key of a target format, and the evaluation key of the target format includes a plurality of extended ciphertexts; and
a cryptographic processing unit, configured to input the ciphertext data into the cryptographic neural network for cryptographic processing, where the cryptographic processing includes: performing, at any target linear layer in the plurality of linear layers, a ciphertext rotation operation by using a first data part corresponding to a first ciphertext level t in the evaluation key, where the first data part includes only partial data of a single extended ciphertext.

According to a third aspect, a computer-readable storage medium is provided, where the computer-readable storage medium stores a computer program, and when the computer program is executed in a computer, the computer program causes the computer to perform the method according to the first aspect.

According to a fourth aspect, a computing device is provided, where the computing device includes a memory and a processor, the memory stores executable code, and the processor, when executing the executable code, implements the method of the first aspect.

In the embodiments of this specification, a ciphertext level of each network layer of a cryptographic neural network is designed, so that a data amount of effectively used Evk data may be reduced, thereby compressing a data amount of the Evk, and improving performance of cryptographic neural network inference. Further, it may be set to reduce a quantity of auxiliary moduli, to further reduce the data amount of the Evk, thereby further reducing transmission and storage costs of the Evk data.

### BRIEF DESCRIPTION OF THE DRAWINGS

To describe the technical solutions in embodiments of the present invention more clearly, the following briefly introduces the accompanying drawings required for describing embodiments. Apparently, the accompanying drawings in the following descriptions merely show some embodiments of the present invention, and a person of ordinary skill in the art may still derive other drawings based on these accompanying drawings without creative efforts.
FIG. 1 shows a main structure of a typical neural network;
FIG. 2 shows a process of performing a vector inner product under a homomorphic operation;
FIG. 3A shows a ciphertext data format in a specific example;
FIG. 3B shows a data format of an evaluation key Evk in a specific example;
FIG. 4A shows a BV decomposition process at a ciphertext level 0;
FIG. 4B shows a BV decomposition process at a ciphertext level 8;
FIG. 4C shows a BV decomposition process at a ciphertext level 9;
FIG. 4D shows a BV decomposition process at a ciphertext level 26.
FIG. 5A shows a process of performing an inner product on an extended ciphertext item and an Evk at a ciphertext level 0;
FIG. 5B shows a process of performing an inner product on an extended ciphertext item and an Evk at a ciphertext level 8;
FIG. 5C shows a process of performing an inner product on an extended ciphertext item and an Evk at a ciphertext level 9;
FIG. 5D shows a process of performing an inner product on an extended ciphertext item and an Evk at a ciphertext level 26;
FIG. 6 shows a highest level to be used for each part in an Evk in a given parameter example;
FIG. 7 shows steps of a process of determining a cryptographic level of a cryptographic neural network in an embodiment;
FIG. 8 shows an example of setting a ciphertext level of a cryptographic neural network in an embodiment;
FIG. 9 is a schematic flowchart of performing model processing using a cryptographic neural network in an embodiment; and
FIG. 10 is a schematic diagram of an apparatus for performing model processing using a cryptographic neural network in an embodiment.

### DETAILED DESCRIPTION

The following describes the solutions provided in this specification with reference to the accompanying drawings.

Fully homomorphic encryption (FHE) is an encryption technology having a homomorphic operation property, and allows calculation processing (for example, an addition operation, a subtraction operation, or a multiplication operation) to be directly performed on encrypted data. A result obtained through calculation is still encrypted, and only a person having a correct key can perform decryption to observe original data and a calculation result. This provides a powerful privacy protection means for data processing.

Cryptographic neural network inference is inference calculation of a neural network model performed on the encrypted data under the fully homomorphic encryption or another encryption solution. This means that inputted/outputted data and a calculation process are both maintained in an encrypted state, so that data privacy in machine learning/deep learning application is ensured, which has great significance in the fields such as medical treatment and finance having strict requirements on data privacy.

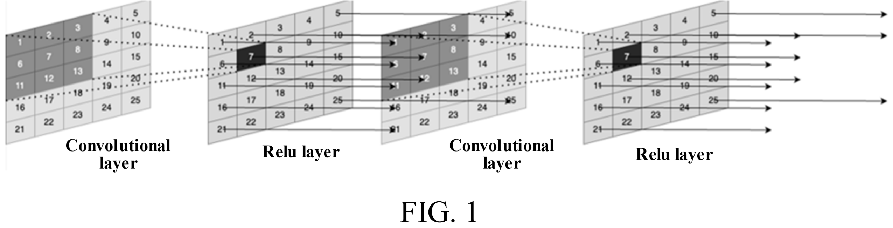

Generally, a neural network structure may alternately include linear operation layers (such as a convolutional layer and a fully-connected layer) and activation layers (such as a Relu layer and a Sigmoid layer). FIG. 1 shows a main structure of a typical neural network. The neural network alternately includes convolutional layers and Relu layers. The classical neural network Resnet20 uses such a network main structure. It can be learned that, for an activation layer such as the Relu layer, each node in the layer generally performs calculation independently, and for calculation in a linear layer such as the convolutional layer, calculation between nodes in the layer is involved. Typically, in a homomorphic operation, a parallel calculation operation is generally performed by using dedicated acceleration hardware and in a single instruction multiple-data (SIMD) manner, and in an SIMD feature, homomorphic calculation (such as addition, subtraction, or multiplication) can only occur between components at a same position of different vectors. Therefore, for an operation in the linear layer involving calculation between the nodes in the layer, a ciphertext rotation operation needs to be performed to complete calculation.

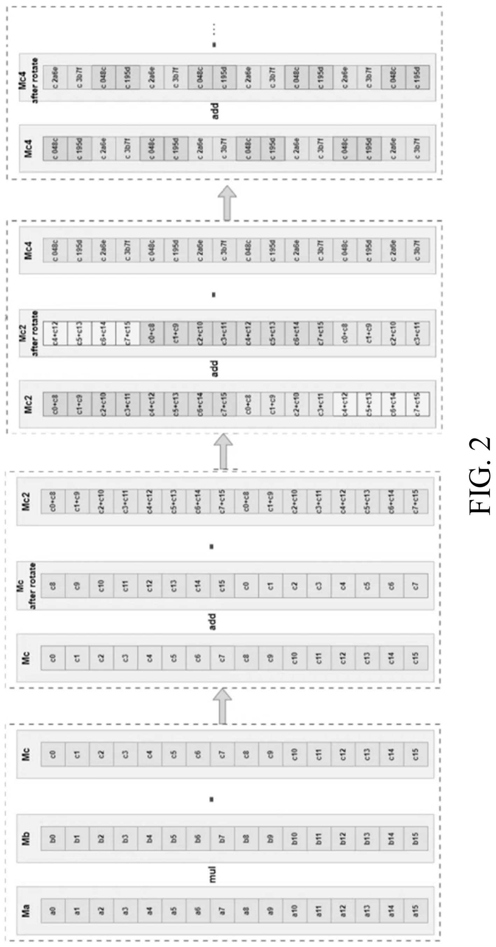

Specifically, a most basic operation in the linear layer is a vector inner product. For example, an operation in the convolutional layer is continuously performing an inner product of a parameter vector of a convolution kernel and a feature vector of a region corresponding to a convolution kernel in a feature map, to generate an output feature value at a corresponding position in the feature map. A basic operation in the fully-connected layer is also performing an inner product on each parameter vector in a parameter matrix and a feature vector. FIG. 2 shows a process of performing a vector inner product under a homomorphic operation. As shown in the figure, a cryptographic vector Ma is stored in a first vector register, and a cryptographic vector Mb is stored in a second vector register. In an SIMD manner, elements at corresponding positions in the two vector registers are cryptographically multiplied, to obtain a cryptographic vector Mc. A 16-dimensional cryptographic vector is shown herein as an example. However, an operation in the SIMD manner does not support an operation between elements at different positions in a same vector register. Therefore, element values of the cryptographic vector Mc cannot be directly summed. In this case, one rotation operation may be performed on the cryptographic vector Mc, where a rotation step is a half of a vector dimension, so that a first half of the vector is moved to a second half of the vector. When there is a 16-dimensional vector, elements whose indexes are 0 to 7 are moved to positions 8 to 15. Then, in the SIMD manner, an element at a corresponding position in the Mc vector before rotation and an element at a corresponding position in an Mc vector after rotation are cryptographically added, to obtain a cryptographic vector Mc2. In this case, each element in the cryptographic vector Mc2 is a homomorphic sum of two elements in the original Mc vector. Next, one rotation operation is performed on the cryptographic vector Mc2 again, where a rotation step is 1/4 vector dimension, and then pairwise addition is performed on the Mc2 before rotation and an Mc2 after rotation, to obtain a cryptographic vector Mc4. The rotation operation is performed many times at different steps, vector summation is performed, and finally, a result vector may be obtained, where each element is equal to a sum of elements in the original Mc vector, thereby implementing a vector inner product.

A ciphertext rotation operation needs to be completed by using an evaluation key (Evk). More specifically, after ciphertext rotation is performed under the homomorphic operation, a key form corresponding to a ciphertext changes. To continue to perform the homomorphic operation, the ciphertext needs to be changed from the key whose form changes back to an original key through key switching. A key switching process relies on use of the evaluation key Evk.

Because during calculation of the linear layer of the cryptographic neural network, ciphertext rotation operations at various different steps are frequently performed, a data holder needs to provide needed evaluation keys Evks at all rotation steps, and use positions of these Evks almost cover all the linear operation layers of the network. In an implementation environment (such as a GPU, an FPGA, or an ASIC) with a limited storage space capability, storage and access to a large quantity of evaluation keys Evks is a very difficult problem. A large amount of Evk data generally cannot be loaded to a chip for storage at a time, and acceleration hardware needs to frequently access a main memory for loading. This also adversely affects cryptographic inference efficiency.

Therefore, in the solution of this specification, after fully researching a ciphertext level change rule and a use situation of the Evk during cryptographic neural network inference, the inventor proposes to set a ciphertext level of the linear layer in a targeted manner, to compress and reduce a data amount of a needed evaluation key Evk, so as to reduce storage, memory access, transmission, and the like of the Evk used in a running process of the cryptographic neural network, thereby improving performance of the cryptographic neural network inference.

The following first describes changes of data formats of the ciphertext and the evaluation key Evk during the cryptographic neural network inference.

A Cheon-Kim-Kim-Song (CKKS) solution is a specific solution of fully homomorphic encryption oriented to value calculation. Compared with another FHE solution, the CKKS solution is specifically suitable for processing a real number operation or a complex number operation with a limited precision requirement. Therefore, the CKKS solution is very practical for processing an application that needs a floating-point operation, such as machine learning and statistics and analysis, and is one of the most frequently-used FHE solutions during the cryptographic neural network inference. The CKKS solution is used as an example below for description. However, it should be understood that, in another similar FHE implementation solution, formats and implementation principles of the ciphertext and the evaluation key Evk are similar to those in the CKKS solution. Therefore, a conclusion that is drawn is equally applicable to another FHE solution having a similar implementation principle.

Specifically, in the CKKS solution, a data format of a ciphertext C includes two polynomial groups. Each polynomial group is referred to as a ciphertext item whose length is L, that is, includes L N-point polynomials (polynomial for short below). Each polynomial corresponds to a homomorphic modulus q_i, and quantities L of polynomials included in two polynomial groups are generally the same.

A concept of a ciphertext level is involved in a ciphertext operation. For example, in a fully homomorphic solution such as the CKKS solution, a ciphertext has a controllable amount of noise, and a homomorphic operation accumulatively increases the noise of the ciphertext. After the noise is accumulated to a specific level, the ciphertext cannot be correctly decrypted. The ciphertext level may be understood as reflecting a noise level of a ciphertext. Generally, an initial ciphertext has a level 0, and after the ciphertext is homomorphically multiplied once, a level of a result ciphertext is a level of the inputted ciphertext plus one.

For the ciphertext item, a quantity of polynomials is reduced as the ciphertext level is increased. Each time the ciphertext level is increased by 1, a quantity of polynomials is reduced by 1, that is, a polynomial having a largest subscript in the homomorphic modulus q_i is removed. Specifically, each ciphertext item in a ciphertext with a level 0 includes L polynomials, and corresponding homomorphic moduli are q_0, q_1, ..., and q_{L-1}. A quantity of polynomials included in each ciphertext item of a ciphertext with a level 1 is L-1, and corresponding homomorphic moduli are q_0, q_1, ..., and q_{L-2}. The rest can be deduced by analogy. Therefore, after an FHE parameter set is selected and a length L of a specific ciphertext item is determined, a maximum noise limit of a ciphertext is determined, a supported highest ciphertext level is further determined, and a ciphertext multiplication depth supported by the solution is further determined. A data size of the ciphertext is reduced as the ciphertext level is increased.

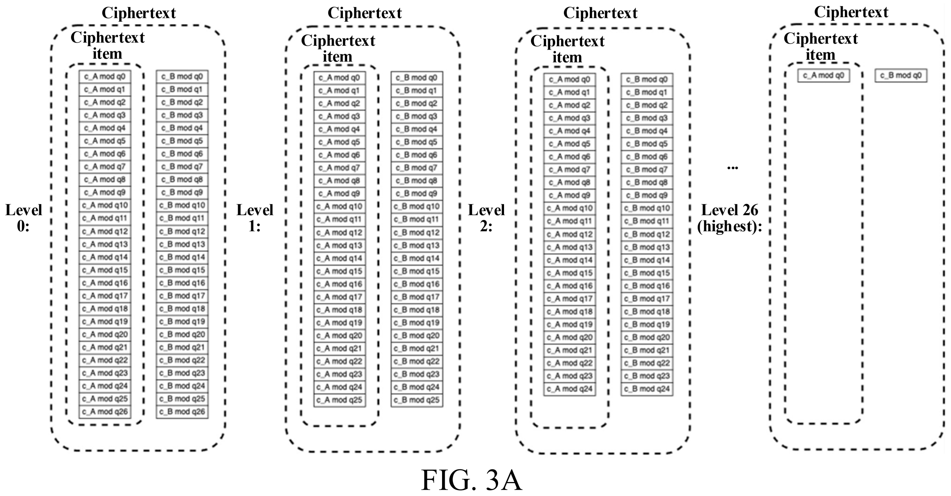

FIG. 3A shows a ciphertext data format in a specific example. In this example, a length L of a ciphertext item is 27. As shown in FIG. 3A, a ciphertext C includes two ciphertext items, and polynomials in the ciphertext items are respectively shown as c_A and c_B. In an initial state corresponding to a level 0, each ciphertext item includes L=27 polynomials, and the polynomials correspond to 27 moduli q0 to q26. At a level 1, a last modulus q26 and a polynomial thereof are removed from each ciphertext item, so that the ciphertext item includes 26 polynomials. Each time the level is increased by 1, the quantity of polynomials is reduced by 1. At a highest ciphertext level 26, only one polynomial corresponding to q0 remains for each ciphertext item.

A data format of the evaluation key Evk may be understood as a combination of a plurality of extended ciphertexts. An extended ciphertext has a format similar to a format of the ciphertext C, and also includes two ciphertext items. However, a modulus corresponding to a polynomial in each ciphertext item in the extended ciphertext further includes a GHS auxiliary modulus p_j in addition to the foregoing homomorphic modulus q_i (where this modulus is referred to as a basic modulus below). If a total quantity of auxiliary moduli in the extended ciphertext is denoted as K, corresponding auxiliary moduli are p_0, p_1, ..., and p_{K-1}. A quantity of extended ciphertexts in the evaluation key Evk whose level is 0 is denoted as dnum, and a quantity of polynomials included in each extended ciphertext item is L+K, and corresponding moduli are q_0, q_1, ..., q_{L-1}, p_0, p_1, ..., and p_{K-1}.

In addition, the evaluation key Evk may further involve a concept referred to as a BV modulus segment. Specifically, the dnum extended ciphertexts in the Evk respectively correspond to a specific quantity of homomorphic modulus segments, a size of a modulus segment is denoted as W, and a relationship satisfies: dnum*W≥L, but (dnum-1)*W<L.

Generally, a BV modulus segment corresponding to a 0^{th} extended ciphertext of the Evk is q_0, q_1, ..., and q_{W-1}, and a BV modulus segment corresponding to a 1^{st} extended ciphertext is q_{W}, q_{W+1}, ..., and q_{2*W-1}. The rest can be deduced by analogy. Therefore, a BV modulus segment corresponding to a (dnum-1)^{th} extended ciphertext is q_{(dnum-1}*W}, q_{(dnum-1}*W+1}, ..., and q_{L-1}.

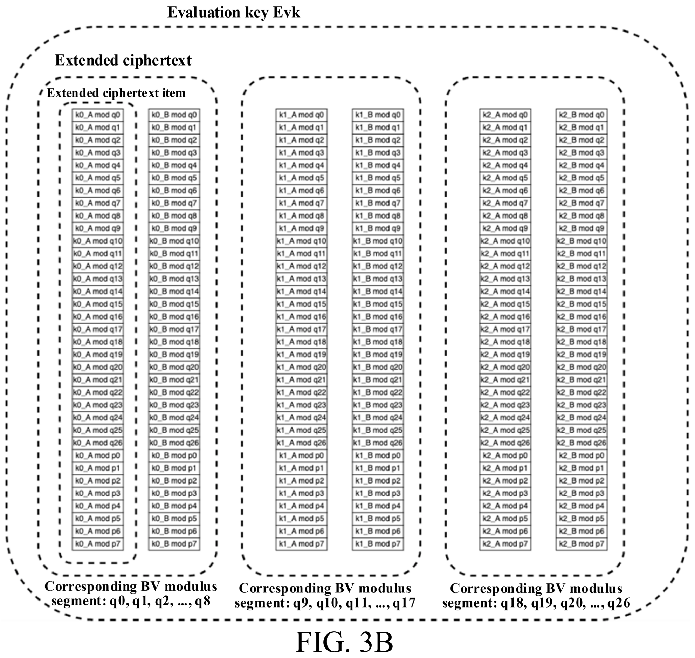

FIG. 3B shows a data format of an evaluation key Evk in a specific example. The example corresponds to the example of FIG. 3A, where L=27. In addition, in an example, specific parameters of the Evk are set as follows: K=8, dnum=3, and W=9. As shown in FIG. 3B, the evaluation key Evk includes dnum=3 extended ciphertexts, each extended ciphertext includes two extended ciphertext items respectively shown by subscripts A and B, each extended ciphertext item includes L+K polynomials, and corresponding moduli are respectively L=27 basic moduli formed by q0 to q26 and K=8 auxiliary moduli formed by p0 to p7. In addition, in the evaluation key Evk, a BV modulus segment corresponding to a 0^{th} extended ciphertext is q0 to q8, a BV modulus segment corresponding to a 1^{st} extended ciphertext is q9 to q17, and a BV modulus segment corresponding to a 2^{nd} extended ciphertext is q18 to q26.

Parameter settings of the ciphertext and the evaluation key are both the foregoing settings unless otherwise specified in subsequent content of this specification.

A data flow process in a classical key switching algorithm is described below. Because this solution focuses on aspects of a data amount and storage and transmission, specific detailed algorithm steps may be omitted, and only inputted/outputted data content is described emphatically. A classical BV-GHS key switching algorithm is used as an example. A key switching process may generally include three steps: BV decomposition of a ciphertext item, performing an inner product on an extended ciphertext item and the Evk, and extended ciphertext reduction. Because the extended ciphertext reduction does not involve use of the evaluation key Evk and data format change, an operation process thereof is not described herein, and only the BV decomposition and the inner product process are concerned about.

### (1) BV decomposition of the ciphertext item

At a stage of the BV decomposition of the ciphertext item, parameters involved in an operation include a ciphertext level t and a current quantity u of BV segments. An input of the operation is a ciphertext item Cin with a level t, which includes L-t polynomials, and moduli are respectively q_0, q_1, ..., and q_{L-1-t}. The L-t polynomials correspond to the u BV segments. A 0^{th} BV modulus segment is q_0, q_1, ..., and q_{W-1}, a 1^{st} BV modulus segment is q_{W}, q_{W+1}, ..., and q_{2*W-1}, ..., and a (u-1)^{th} BV modulus segment is q_{(u-1}*W}, q_{(u-1}*W+1}, ..., and q_{L-t-1}.

An algorithm process of the BV decomposition is: for the inputted ciphertext item Cin, a polynomial corresponding to the 0^{th} BV modulus segment in the Cin is extracted, and a Bconv algorithm (an algorithm process thereof is omitted herein) is performed, to obtain CE_0; a polynomial corresponding to the 1^{st} BV modulus segment in the Cin is extracted, and the Bconv algorithm is performed, to obtain CE_1; and the rest can be deduced by analogy until all u generated extended ciphertext items are obtained.

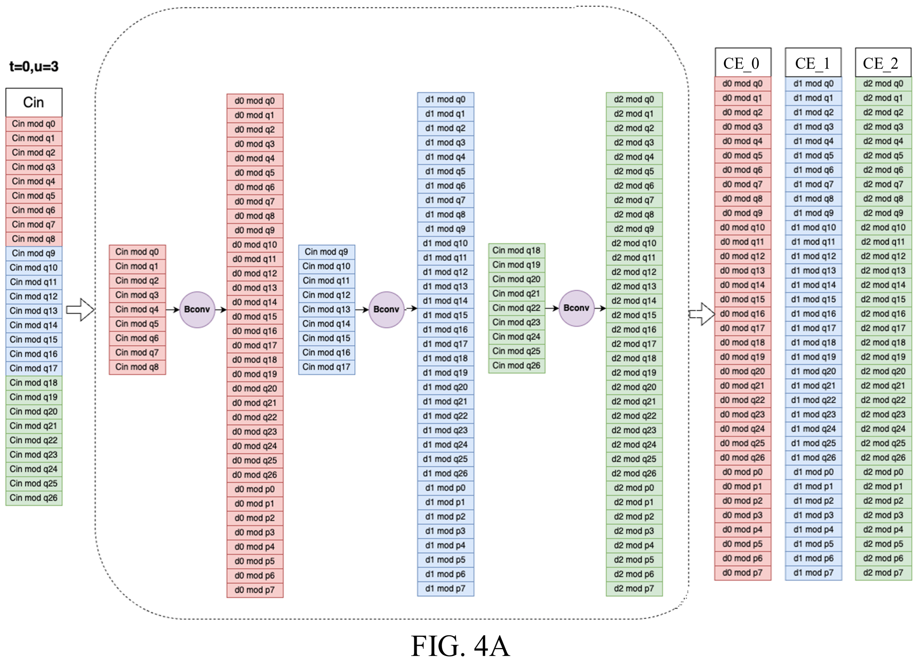

FIG. 4A to FIG. 4D show BV decomposition processes at different levels. In this example, parameter settings of L=27, K=8, and W=9 are still used.

As shown in FIG. 4A, at a ciphertext level 0, a quantity of BV segments is 3. A polynomial (shown in red) of a 0^{th} BV modulus segment q0 to q8 is extracted from the ciphertext item Cin, and the Bconv algorithm is performed, to obtain CE_0 (shown in red). A polynomial (shown in blue) of a 1^{st} BV modulus segment q9 to q17 is extracted from the ciphertext item Cin, and the Bconv algorithm is performed, to obtain CE_1 (shown in blue). Then, a polynomial (shown in green) of a 2^{nd} BV modulus segment q18 to q26 is extracted from the ciphertext item Cin, and the Bconv algorithm is performed, to obtain CE_2 (shown in green).

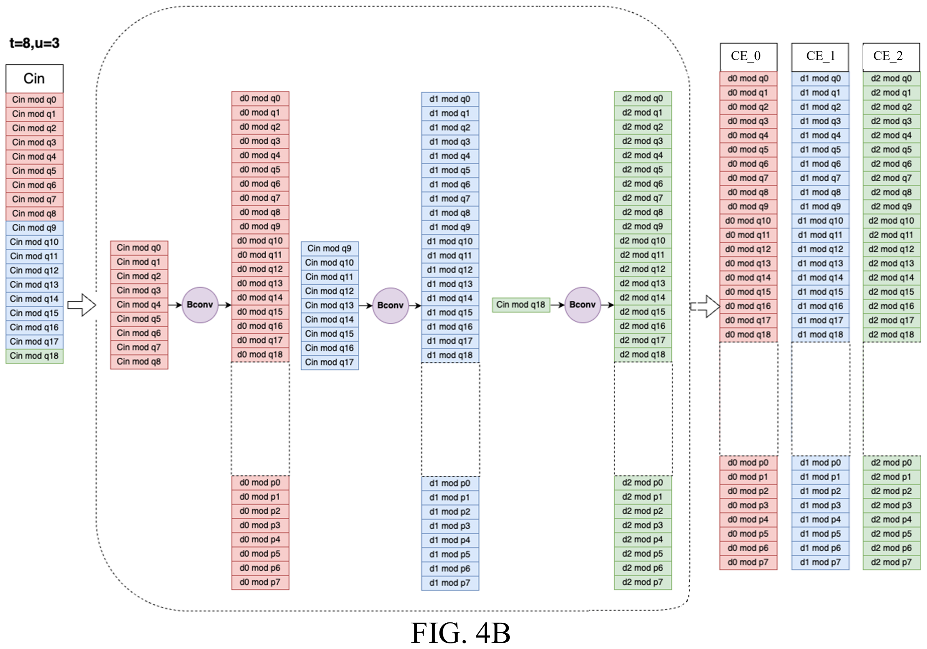

FIG. 4B shows BV decomposition at a ciphertext level 8. According to the principle shown in FIG. 3A, at the ciphertext level t=8, a length of the ciphertext item Cin is reduced to L-t=19, which corresponds to basic moduli q0 to q18. In other words, compared with an original ciphertext item, polynomials of basic moduli q19 to q26 are reduced. In this case, the quantity of BV segments is still 3. However, different from FIG. 4A, the 2^{nd} BV modulus segment includes only one polynomial corresponding to q18. Correspondingly, in the generated extended ciphertext items CE_0 to CE_2, items corresponding to the basic moduli q19 to q26 are all missed.

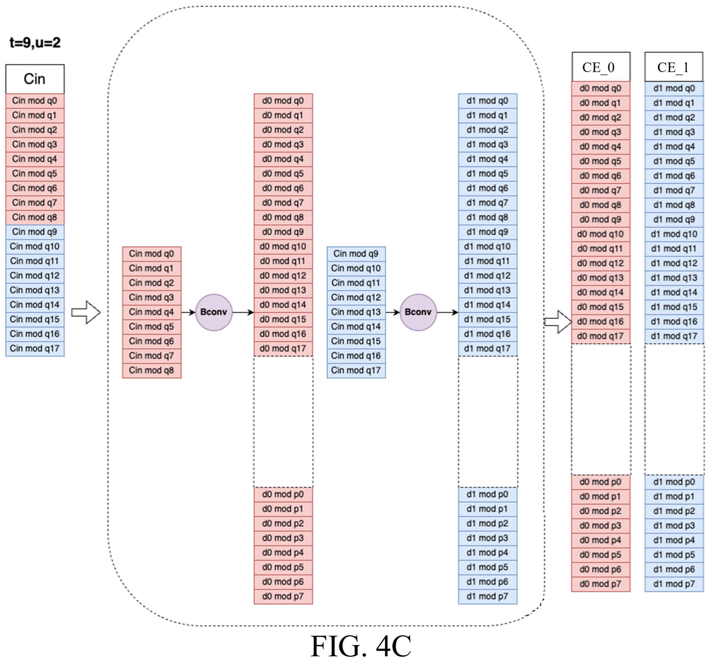

FIG. 4C shows BV decomposition at a ciphertext level 9. It can be learned from comparison with FIG. 4B that, as the ciphertext level is further increased, the length of the ciphertext item Cin is further reduced to 18, which corresponds to basic moduli q0 to q17. In this case, the quantity of BV segments is reduced to 2. The BV decomposition process includes only obtaining CE_0 (shown in red) based on the polynomial (shown in red) of the 0^{th} BV modulus segment q0 to q8; and obtaining CE_1 (shown in blue) based on the polynomial (shown in blue) of the 1^{st} BV modulus segment q9 to q17. In this case, the generated extended ciphertext items include only CE_0 and CE_1, and items corresponding to the basic moduli q18 to q26 are all missed.

As the ciphertext level is further increased, it may be assumed that the length of the ciphertext item Cin is further reduced. It may be understood that, at a ciphertext level t=18, the quantity of BV segments is reduced to 1, and the correspondingly generated extended ciphertext item includes only CE_0.

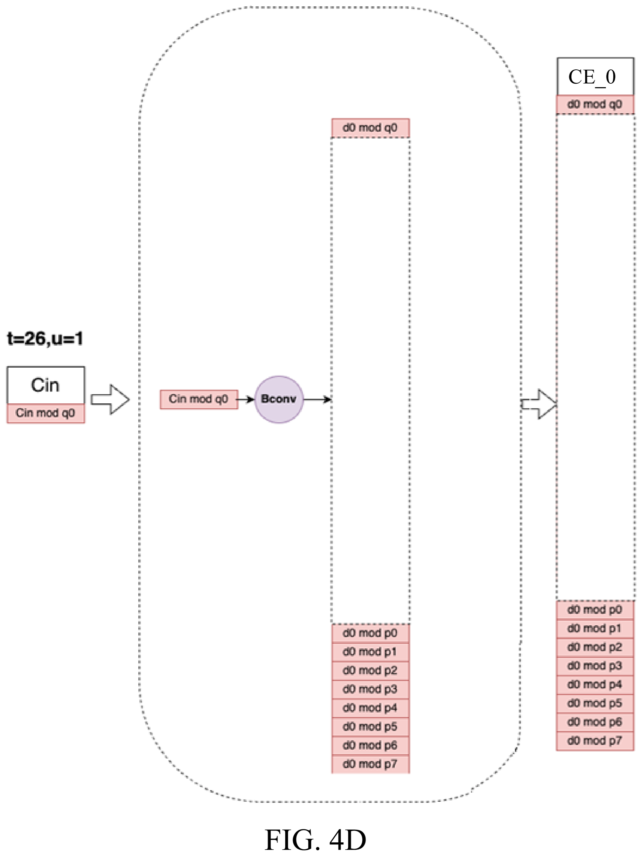

FIG. 4D shows BV decomposition at a ciphertext level 26. At the highest level, the ciphertext item Cin includes only one polynomial corresponding to q0, and the quantity of BV segments is 1. The generated extended ciphertext item includes only CE_0, and items corresponding to the basic moduli q1 to q26 are all missed.

### (2) Perform an inner product on the extended ciphertext item and the Evk

At a stage of performing the inner product on the extended ciphertext item and the Evk, parameters involved in an operation include a ciphertext level t and a current quantity u of BV segments. An input of the operation is the evaluation key Evk (for example, shown in FIG. 3B) and u extended ciphertext items CE_0, CE_1, ..., and CE_{u-1} with a level t that are generated through the BV decomposition of the ciphertext item, that is, an output of the previous step.

An algorithm process at this stage includes: multiplying the extended ciphertext item CE_0 by a 0^{th} extended ciphertext of the Evk, to obtain CE_pro_0, where the multiplication operation only occurs between two polynomials having a same modulus, and no redundant polynomial in the Evk participates in the operation; and multiplying the extended ciphertext item CE_1 by a 1^{st} extended ciphertext of the Evk, to obtain CE_pro_1, and the rest can be deduced by analogy; and adding u extended ciphertext items CE_pro_0, CE_pro_1, ..., and CE_pro_{u-1} with a level t, to obtain CE_innpro as an inner product result ciphertext.

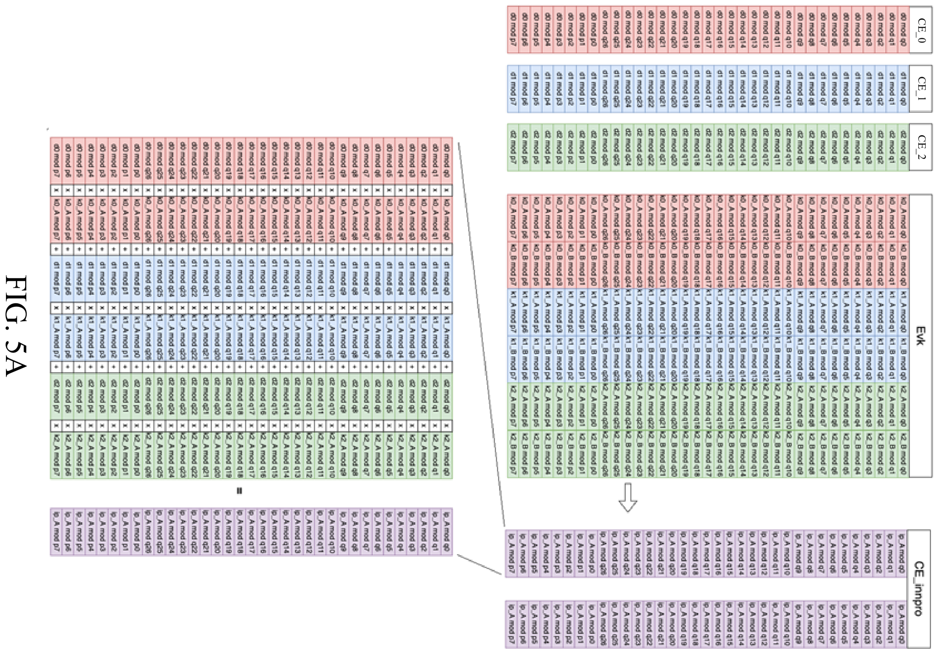

FIG. 5A to FIG. 5D show processes of performing an inner product on an extended ciphertext item and an Evk at different ciphertext levels. In this example, parameter settings of L=27, K=8, and W=9 are still used, which respectively correspond to the ciphertext levels in FIG. 4A to FIG. 4D.

As shown in FIG. 5A, at a ciphertext level 0, a quantity of BV segments is 3, and three generated extended ciphertext items CE_0, CE_1, and CE_2 are obtained through the BV decomposition. In addition, the evaluation key Evk has a form shown in FIG. 3B, that is, includes dnum=3 extended ciphertexts, each extended ciphertext includes two ciphertext items respectively identified by subscripts A and B, and each ciphertext item includes L+K=35 polynomials.

A lower part of FIG. 5A shows a process of generating a ciphertext item in the inner product result ciphertext CE_innpro. Specifically, pairwise multiplication is performed on CE_0 (shown in red) and a group A ciphertext item (a first column of extended ciphertexts in red parts in the Evk) in a 0^{th} extended ciphertext in the Evk, pairwise multiplication is performed on CE_1 (shown in blue) and a group A ciphertext item (a first column of extended ciphertexts in blue parts in the Evk) in a 1^{st} extended ciphertext in the Evk, pairwise multiplication is performed on CE_2 (shown in green) and a group A ciphertext item (a first column of extended ciphertexts in green parts in the Evk) in a 2^{nd} extended ciphertext in the Evk, and pairwise multiplication results of three parts: red, blue, and green are added, to obtain a group A ciphertext item in the inner product result ciphertext CE_innpro. Similarly, pairwise multiplication may be performed on CE_i and a group B ciphertext item in an i^{th} extended ciphertext respectively, and results are added, to obtain a group B ciphertext item in the inner product result ciphertext CE_innpro.

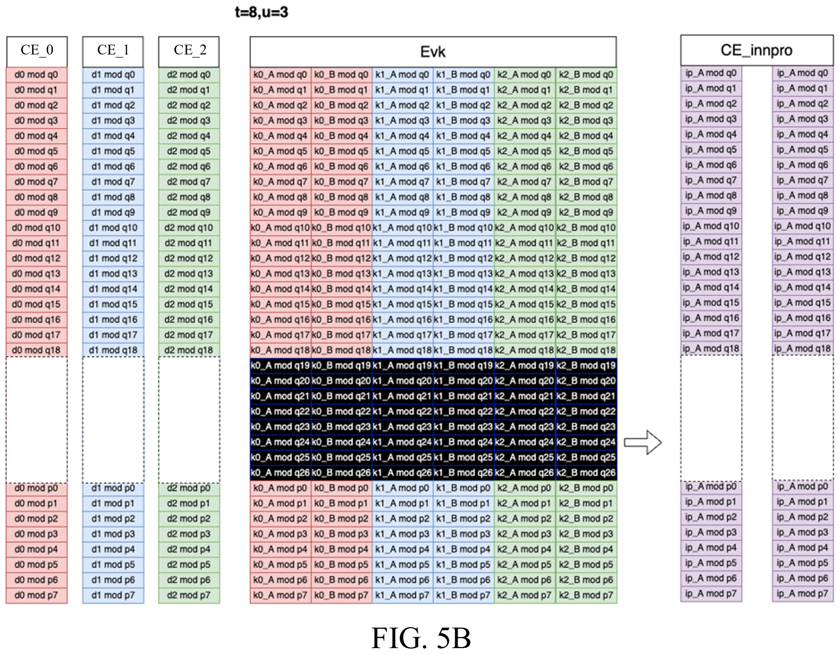

FIG. 5B is a schematic diagram of performing an inner product when a ciphertext level t is 8. As shown in the figure, at this ciphertext level, the quantity of BV segments is still 3, and in the generated extended ciphertext items CE_0 to CE_2, the items corresponding to the basic moduli q19 to q26 are all missed. Because these items are missed, a polynomial corresponding to a modulus in the Evk in the inner product process is not be used either, and this part of data is shown in black. Correspondingly, in the generated inner product result ciphertext CE_innpro, the items corresponding to the basic moduli q19 to q26 are also missed in the ciphertext item.

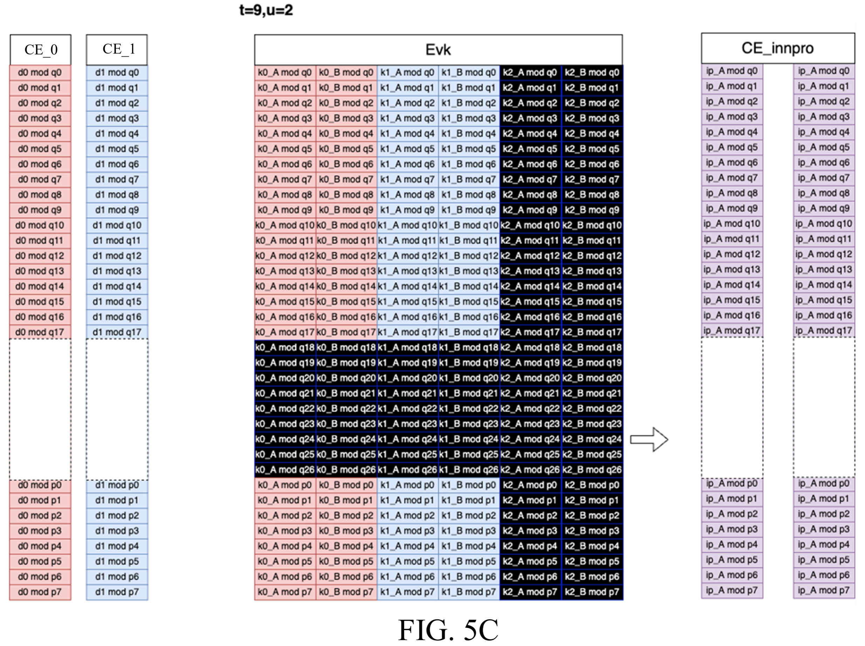

FIG. 5C is a schematic diagram of performing an inner product when a ciphertext level t is 9. It can be learned from the foregoing FIG. 4C that, when the ciphertext level is increased to 9, the quantity of BV segments is reduced to 2, the extended ciphertext item generated through the BV decomposition includes only CE_0 and CE_1, and the items corresponding to the basic moduli q18 to q26 are all missed. When the inner product is performed on the 2^{nd} extended ciphertext and the Evk based on such extended ciphertext items CE_0 and CE_1, because CE_2 is missed, the entire second extended ciphertext in the Evk is not be used. In addition, in the 0^{th} extended ciphertext and the 1^{st} extended ciphertext, the polynomials corresponding to the basic moduli q18 to q26 is not be used either. Data that is not be used is shown in black.

As the ciphertext level is further increased, it may be conceived that a quantity of ciphertext items generated through the BV decomposition is further reduced, and a length thereof is further reduced. It may be understood that, at a ciphertext level t=18, the quantity of BV segments is reduced to 1, and the correspondingly generated extended ciphertext item includes only CE_0. Correspondingly, in the process of performing an inner product with the Evk, only some polynomials in the 0^{th} extended ciphertext of the Evk is used.

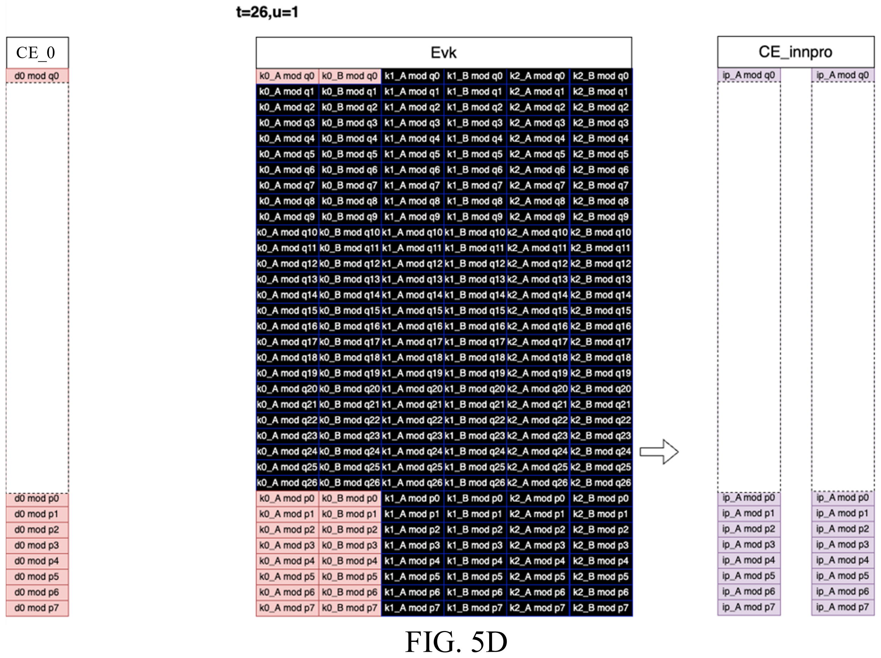

FIG. 5D is a schematic diagram of performing an inner product when a ciphertext level is 26. At the highest level, the generated extended ciphertext item includes only CE_0, and the items corresponding to the basic moduli q1 to q26 are all missed. Correspondingly, in a process of performing an inner product with the Evk, the entire 1^{st} extended ciphertext and 2^{nd} extended ciphertext in the Evk is not be used. In addition, in the 0^{th} extended ciphertext, the polynomials corresponding to the basic modulus q1 to q26 is not be used either. Data that is not be used is shown in black.

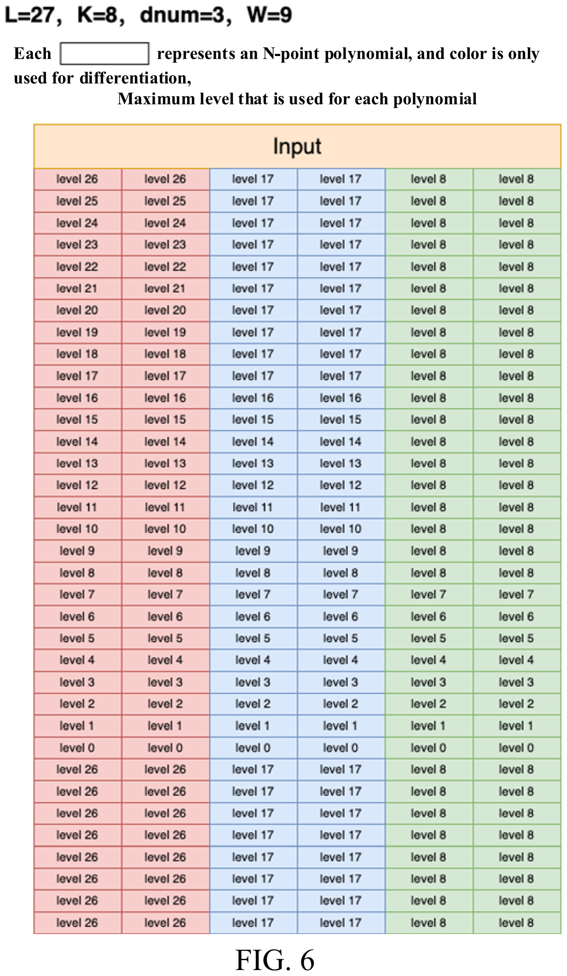

It can be known by comparing and analyzing FIG. 5A to FIG. 5D that, in a process of performing key switching on the ciphertext level t, all polynomials (that is, non-black parts in FIG. 5A to FIG. 5D) in the Evk that are actually used constitute effectively used Evk data of the level t. Clearly, a higher level of the inputted ciphertext item on which the key switching operation is performed indicates a smaller data amount of the effectively used Evk data. FIG. 6 shows a highest level to be used for each part in an Evk in a given parameter example. A highest level T corresponding to a polynomial P refers to that the polynomial P does not need to be used in a key switching process for a ciphertext exceeding the level T.

In the CKKS solution, when the ciphertext rotation operation is performed on the ciphertext, key switching needs to be used, and Evks used for the ciphertext rotation at different rotation steps are different from each other. Therefore, when a quantity of different step types of a rotation operation needed in the cryptographic neural network is large, a quantity of Evks needed for executing the cryptographic neural network is also very large. Using a frequently-used Resnet20 network as an example, a quantity N of polynomial points is generally 65536, and a size Wordsize of single-point data is 8 bytes. A data size corresponding to each Evk with a level 0 may be represented as Wordsize*N*2*(L+K)*dnum. When N=65536, Wordsize is 8 bytes, and ciphertext parameters are set as L=27, K=8, and dnum=3 as described above, it may be obtained that a size of the Evk is 8 Bytes*65536*2*(27+8)*3=105 MB. Currently, approximate 300 different rotation steps are generally used for CKKS implementation of the Resnet20. If all Evks are stored based on a level 0 format, a data amount of the corresponding Evk is approximately 30 GB.

An excessive large data amount of the evaluation key Evk affects execution efficiency of cryptographic neural network inference in two aspects. A user needs to upload the Evk data to a server on which the cryptographic neural network is deployed, so that the server performs cryptographic inference. An excessive large data amount of the Evk affects communication efficiency between the user and a server side. In addition, an excessive large data amount of the Evk also affects calculation efficiency of the server side. Because the server side generally uses acceleration hardware with high calculation performance, such as a GPU, an FPGA, and an ASIC, to perform the cryptographic inference, storage space of a high-speed storage unit in the acceleration hardware is limited, and data needs to be migrated and scheduled in real time after a storage limit is exceeded, leading to a performance bottleneck.

Based on the foregoing analysis and research, it is provided in the embodiments of this specification that a data amount of effectively used Evk data can be reduced by designing a cryptographic operation level of the cryptographic neural network, and performance of cryptographic neural network inference can be improved by compressing the data amount of the Evk.

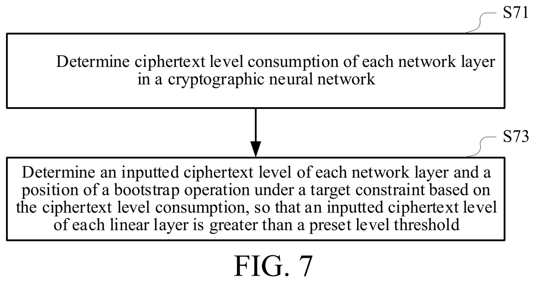

Therefore, first, as shown in FIG. 7, a cryptographic level of the cryptographic neural network is determined. As shown in FIG. 7, first, in step 71, ciphertext level consumption of each network layer in the cryptographic neural network is determined.

As described above, a neural network structure alternately includes the linear operation layer (such as the convolutional layer or the fully-connected layer) and the activation layer (such as the Relu layer or the Sigmoid layer). The linear layer generally consumes a depth of a second-level multiplication operation, and therefore consumes the 2-level ciphertext level. The convolutional layer is used as an example for description. In the convolutional layer, an inner product needs to be performed on the parameter vector and the feature vector of the convolution kernel, and the process of performing the inner product is shown in FIG. 2. Clearly, a multiplication depth is consumed when pairwise multiplication is performed on the parameter vector and the feature vector. In addition, convolution kernel positions are constantly changed, and a plurality of rotation operations often generate junk points that are not needed or incorrect in a next round. To eliminate these junk points, pairwise multiplication is generally performed on an intermediate result and a mask vector, and positions of unneeded junk points in the mask vector are set to zero. Therefore, eliminating of the junk points also consume a multiplication depth. Generally, operations on most linear layers consume a second-level multiplication depth. Setting of a specific fully-connected layer makes a rotation operation process not generate the junk points, and may consume only a first-level multiplication depth.

Because the homomorphic operation supports only a linear operation, an operation on the activation layer in the cryptographic neural network is generally implemented through polynomial fitting. In other words, an activation function, such as a Relu function or a Sigmoid function, of the activation layer is fitted and approximated through the polynomial. Common polynomial fitting includes Taylor expansion. Therefore, a ciphertext level consumed by the activation layer depends on an order of polynomial expansion. For example, if fourth-order Taylor expansion is performed on the activation function, the corresponding activation layer consumes a fourth-level multiplication depth, that is, a 4-level ciphertext level. However, an operation on the activation layer does not need the rotation operation, that is, the evaluation key Evk is not needed.

The cryptographic neural network may further include another calculation layer, for example, downsampling. The ciphertext level consumption of each calculation layer may be deduced based on the multiplication depth used for the cryptographic operation.

Based on that the consumption of each network layer for the ciphertext level is determined, in step 73, an inputted ciphertext level of each network layer and a position of a bootstrap operation are determined under a target constraint based on the ciphertext level consumption, so that an inputted ciphertext level of each linear layer is greater than a first threshold, where the target constraint includes that an outputted ciphertext level of each network layer is not greater than the highest ciphertext level.

It may be understood that, because an operation on the linear layer involves a large quantity of rotation operations with different steps, and a large quantity of evaluation keys Evks are needed, the design of the cryptographic neural network mainly focuses on the ciphertext level of the linear layer. Because a higher ciphertext level indicates less effectively used Evk data, an objective of designing the ciphertext level is to make the ciphertext level of the linear layer as high as possible. Therefore, a threshold may be set, so that the inputted ciphertext level of each linear layer is higher than this threshold. In an embodiment, the threshold may be set to cause the effectively used Evk data to include only a single extended ciphertext. For example, in the foregoing example in which L=27 and W=8, when the ciphertext level t is higher than 18, the effectively used Evk data includes only the 0^{th} extended ciphertext.

Design of the ciphertext level further needs to satisfy the target constraint, that is, the outputted ciphertext level of each network layer is not greater than the highest ciphertext level. If a network layer performs an operation based on the inputted ciphertext level, and the outputted ciphertext level is greater than the highest ciphertext level, the bootstrap operation may be inserted before the network layer, to reduce the ciphertext level.

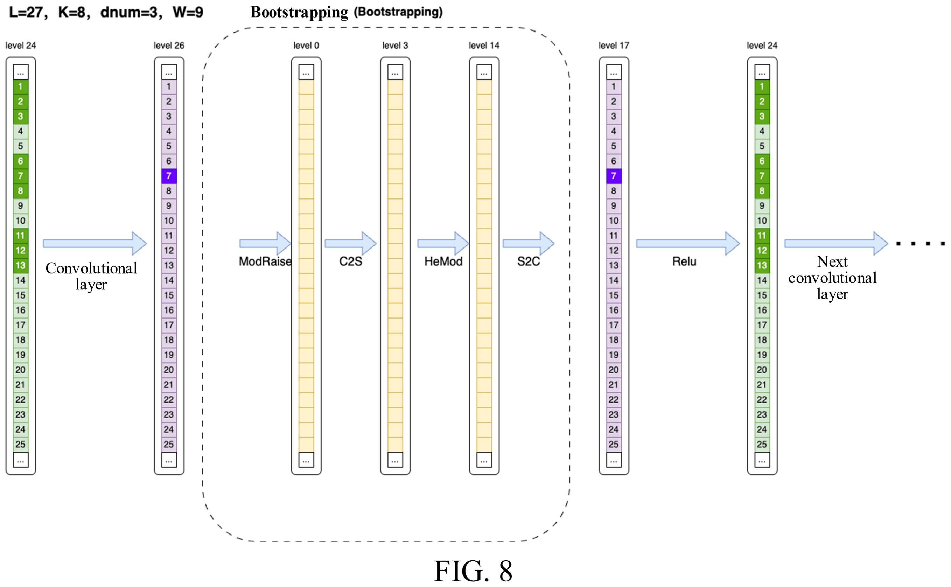

FIG. 8 shows an example of setting a ciphertext level of a cryptographic neural network in an embodiment. In this example, using a network structure of the Resnet20 as an example, level setting of the ciphertext at each network layer in the neural network is provided. The example still complies with parameter settings of L=27, K=8, dnum=3, and W=9. Under the parameter setting, the highest ciphertext level supported by the cryptographic operation is a level 26. To reduce a data amount of the effectively used Evk data, an operation of the convolutional layer is set to a high ciphertext level. Considering that the convolutional layer consumes two ciphertext levels, in the example in FIG. 8, an inputted ciphertext level of the convolutional layer is set to 24. In this way, the ciphertext level outputted by the convolutional layer is the level 26, which is the highest level. The multiplication operation cannot be performed on the highest ciphertext level. Therefore, the bootstrap operation may be inserted after the convolutional layer.

A function of the bootstrap operation is to reduce the noise level of the ciphertext on a premise of ensuring that plaintext content corresponding to the ciphertext is unchanged, which is represented that the ciphertext level is reduced in practice. The bootstrap operation generally includes four steps: ModRaise, C2S, HeMod, and S2C, where C2S and S2C also involve the rotation operation on the ciphertext, and the Evk is used. However, a quantity of involved Evks is relatively limited.

In the bootstrap operation, ciphertext levels may be reduced to different degrees based on setting of parameters in the operation. In the example in FIG. 8, it is assumed that the bootstrap operation reduces the ciphertext level from 26 to 17.

Next, the ciphertext with the level 17 is inputted into the Relu layer. During implementation of the cryptographic neural network, an essence of a cryptographic Relu operation is performing calculation after performing polynomial fitting on the Relu function. In a typical example, the polynomial fitting is performed 119 times, which consumes seven multiplication depths. Therefore, the ciphertext level outputted by the Relu layer is upgraded to 24 again. The next convolutional layer may also be set to start an operation at the ciphertext level 24. In this way, a further operation may be directly performed on an output of the Relu layer. A subsequent network layer may use a similar setting manner.

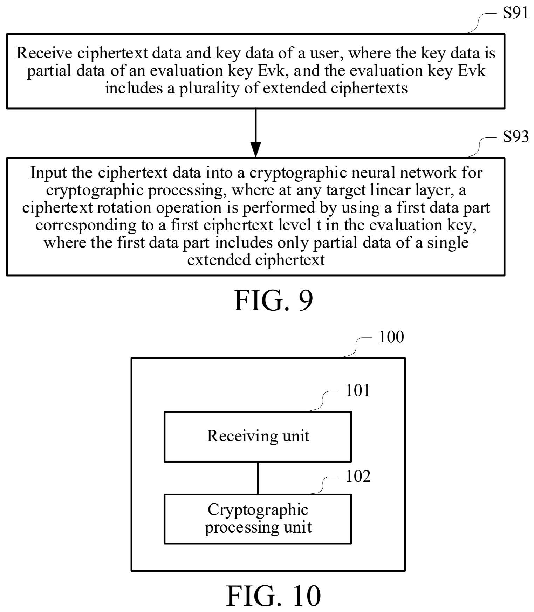

After the cryptographic neural network is designed in the foregoing manner, and the cryptographic level of each network layer is determined, the cryptographic neural network may be used to perform cryptographic model inference. FIG. 9 is a schematic flowchart of performing model processing using a cryptographic neural network in an embodiment. It may be understood that, the method process may be performed by a computing device on which the foregoing cryptographic neural network is deployed. The computing device may be a device of a cloud serving party, and may be specifically any computing platform or device cluster with a strong computing power resource. A plaintext model corresponding to the cryptographic neural network may be obtained by the computing device through training, or provided by a third-party model provider, or provided by a user. This is not limited herein. After the ciphertext level of the cryptographic neural network is set, a procedure of steps in FIG. 9 may be performed.

As shown in FIG. 9, a cryptographic model inference process may include step 91, where ciphertext data and key data of a user are received, where the key data is partial data of the evaluation key Evk of a target format, and the evaluation key Evk of the target format includes a plurality of extended ciphertexts.

Generally, format parameters of the ciphertext data C and the evaluation key Evk, including the foregoing quantity L of basic moduli, the foregoing quantity K of auxiliary moduli, the foregoing quantity dnum of extended ciphertexts, and the size W of the modulus segment, may be pre-negotiated and determined by the user and the computing device, or determined by the computing device after considering cryptographic operation performance, and a user-side device is notified. Therefore, the user-side device may perform homomorphic encryption on to-be-calculated user data plaintext (which may relate to privacy data of the user) according to an agreed algorithm and a format parameter, to obtain the ciphertext data C. As described above, a ciphertext item in the ciphertext data C includes L basic polynomials corresponding to L basic moduli. Correspondingly, the user may further prepare the evaluation key Evk of the target format. The evaluation key Evk includes dnum extended ciphertexts, and the ciphertext item of the extended ciphertext includes L first polynomials corresponding to L basic moduli and K second polynomials corresponding to K auxiliary moduli.

Because all ciphertext levels of the cryptographic neural network are determined, the effectively used Evk data used in cryptographic inference can also be determined. In an embodiment, the computing device may send indication information of the effectively used Evk data to user equipment. The indication information includes, for example, a number of an extended ciphertext to be used in the Evk corresponding to a specific rotation step and a number of a polynomial (or a modulus) to be used in the extended ciphertext. In this way, the user equipment may extract, from full data of the evaluation key Evk based on the indication information, the effectively used Evk data as transmitted key data.

Based on this, in step 93, the ciphertext data C is inputted into the cryptographic neural network for cryptographic processing, where the cryptographic processing includes: performing, at any target linear layer in the plurality of linear layers, the ciphertext rotation operation by using a first data part corresponding to a first ciphertext level t in the evaluation key, where the first data part includes only partial data of a single extended ciphertext.

It should be understood that, the first ciphertext level t herein is a ciphertext level set for the target linear layer. As described above, to reduce the data amount of the effectively used Evk data as much as possible, the ciphertext level of each linear layer is set to a high value, for example, higher than the level threshold. In an embodiment, the level threshold may be set to cause the effectively used Evk data to include only a single extended ciphertext. In this way, when the ciphertext rotation operation is performed at the first ciphertext level t, only the first data part, that is, partial data of a single extended ciphertext in the Evk, needs to be used.

If the ciphertext level inputted into the target linear layer is less than the first ciphertext level t, the ciphertext level may be increased to the first ciphertext level t through a ciphertext level increasing operation. The ciphertext increasing operation may be implemented through a simple operation. For example, the ciphertext level of the current ciphertext is increased by n levels by performing cryptographic multiplication with the unit vector for n times.

Further, according to the examples shown in FIG. 5A to FIG. 5D, at the ciphertext level t, partial data used in the evaluation key Evk is a first polynomial corresponding to the L-t basic moduli and a second polynomial corresponding to the K auxiliary moduli. To further reduce the data amount of the Evk, when L is given, the ciphertext level t may be set to cause a value of L-t to be less than the preset threshold Th. For example, the threshold Th may be set to 4. In this way, at most Th+K polynomials are used in the evaluation key Evk.

As described above, setting of the ciphertext level t further needs to consider the ciphertext level consumed by the network layer, so that an entire cryptographic inference process conforms to a constraint of an entire ciphertext level. Therefore, if the target linear layer consumes the 2-level ciphertext level, for example, is the convolutional layer, the ciphertext level t is set to cause L-t to be greater than or equal to 3. In this way, it can be ensured that the output of the target linear layer does not exceed the highest ciphertext level L-1. If an operation on the target linear layer consumes the 1-level ciphertext level, the ciphertext level t may be set to cause L-t to be greater than or equal to 2.

Because the target linear layer is set to a high ciphertext level, a ciphertext outputted by the target linear layer may not continue to perform cryptographic multiplication calculation on a subsequent network layer. In this case, after an operation on the target linear layer is performed, the bootstrap operation is performed. The bootstrap operation is to perform ciphertext level reduction processing by using the second data part that is in the evaluation key and that corresponds to the second ciphertext level. As described above, the ciphertext level in the bootstrap operation is generally low, so that the second ciphertext level is generally less than the first ciphertext level. Correspondingly, the second data part may include more Evk data.

Correspondingly, in an embodiment, the key data transmitted by the user in step 91 may include only the first data part used by each linear layer and the second data part used for the bootstrap operation.

Through the foregoing setting and cryptographic execution process, transmission and Evk data that needs to be stored may be greatly reduced.

As described above, in a CKKS implementation of the Resnet20 network, a data amount of a single Evk with the level 0 is 105M. In the Resnet20 network model, the ciphertext rotation involves a total of 298 different rotation steps. On a premise that each Evk is stored based on a format of level 0, a total data amount is 298*105 MB=30.56 GB. In the 298 rotation steps, 39 steps are used in bootstrap, and remaining 259 steps are used in the linear operation layer of the network. According to the ciphertext level setting manner in the embodiments of this specification, the linear operation layer may be stored in a format of the level 24. When format parameters (L, K, W, and the like) are not changed, and in this case, a size of each Evk is 8 Bytes*65536*2*(3+8)*1=11 MB, a data amount of a total Evks is 39*105MB+259*11 MB=6.78 GB, which reduces a data amount of the Evk of (30.56-6.78)/30.56*100%=77.8%, which is very noticeable for transmission and storage.

Further, by researching an algorithm of performing key switching by using the Evk, it is found that the auxiliary modulus p_j plays a role of preventing loud noise from being accumulated in the key switching process. To achieve this objective, it only needs to be ensured that a sum of a total quantity of bits of the auxiliary modulus p_j is slightly greater than a sum of a total quantity of bits of a homomorphic modulus in each of u BV modulus segments when the BV decomposition is performed on the ciphertext item. This condition may be referred to as a modulus bit constraint.

In the foregoing example, a parameter configuration of K=8 and W=9 is always maintained. Such a parameter configuration may satisfy the foregoing modulus bit constraint at any ciphertext level, because at all levels, a product of all homomorphic moduli q_i in the BV segment is always less than a product of all auxiliary moduli p_j. Specifically, in typical parameter setting, q_i is 47 bits, and p_j is 58 bits. Clearly, a sum of a total quantity of bits of auxiliary keys, 58*8, is slightly greater than a total quantity of bits of moduli in the BV segments, 47*9.

However, for a high-level key switching, there is only one BV segment and some moduli in the BV segment are missed. For example, in the foregoing embodiment, the ciphertext level t is set to cause a value of L-t to be less than a preset threshold Th, where L-t is a quantity of moduli remaining in the BV segment. When the quantity of moduli does not exceed the threshold Th, a quantity K of auxiliary moduli may be set to the threshold Th, or be slightly greater than the threshold, to ensure that the foregoing modulus bit constraint is satisfied.

For example, in a specific example, L-t is set to not exceed three (that is, Th=3), so that the quantity K of auxiliary moduli p_j may be reduced to 3 in a targeted manner. In this way, a size of each Evk of the linear layer is further reduced from 11 MB to 8 Bytes*65536*2*(3+3)*1=6 MB, and a size of a data amount of a total Evks is 39*105 MB+298*6 MB=5.75 GB. Compared with a case of full storage of the Evk, a data amount of the Evk is reduced by (30.56-5.75)/30.56*100%=81.2%. Clearly, as types of rotation steps in the linear layer operation increase, a compression ratio of the data amount of the Evk is larger.

In view of the foregoing process, in the embodiments of this specification, a data amount of effectively used Evk data can be reduced by designing a cryptographic operation level of the cryptographic neural network, and performance of cryptographic neural network inference can be improved by compressing the data amount of the Evk. Further, it may be set to reduce a quantity of auxiliary moduli, to further reduce the data amount of the Evk, thereby further reducing transmission and storage costs of the Evk data.

According to an embodiment of another aspect, an apparatus for model inference using a cryptographic neural network is provided. FIG. 10 is a schematic structural diagram of a model inference apparatus according to an embodiment. The apparatus may be deployed in any device, platform, or device cluster having a data storage capability, a computing capability, or a processing capability. As shown in FIG. 10, the model inference apparatus 100 includes:
a receiving unit 101, configured to receive ciphertext data and key data of a user, where the key data is partial data of an evaluation key of a target format, and the evaluation key of the target format includes a plurality of extended ciphertexts; and
a cryptographic processing unit 103, configured to input the ciphertext data into the cryptographic neural network for cryptographic processing, where the cryptographic processing includes: performing, at any target linear layer in the plurality of linear layers, a ciphertext rotation operation by using a first data part corresponding to a first ciphertext level t in the evaluation key, where the first data part includes only partial data of a single extended ciphertext.

For implementation of each unit in the foregoing apparatus, refer to the descriptions in combination with the method embodiments. Through the foregoing apparatus, a data amount of the Evk used in cryptographic inference can be compressed, thereby improving performance of cryptographic inference.

According to an embodiment of another aspect, a computer-readable storage medium is further provided, the computer-readable storage medium stores a computer program, and when the computer program is executed in a computer, the computer program causes the computer to perform the method described with reference to FIG. 9.

According to an embodiment of still another aspect, a computing device is further provided, including a memory and a processor, the memory storing executable code, and the processor implementing the method described with reference to FIG. 9 when executing the executable code.

A person skilled in the art needs to be aware of that in the one or more embodiments, the functions described in the present invention may be implemented by hardware, software, firmware, or a combination or the above. When implemented by using software, the functions can be stored in a computer-readable medium or can be used as one or more instructions or code in a computer-readable medium for transferring.

The objectives, technical solutions, and beneficial effects of the present disclosure are further described in detail in the foregoing specific implementations. It should be understood that, the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A method for model inference using a cryptographic neural network, wherein the cryptographic neural network comprises a plurality of linear layers, and the method comprises:
receiving ciphertext data and key data of a user, wherein the key data is partial data of an evaluation key of a target format, and the evaluation key of the target format comprises a plurality of extended ciphertexts; and
inputting the ciphertext data into the cryptographic neural network for cryptographic processing, wherein the cryptographic processing comprises: performing, at any target linear layer in the plurality of linear layers, a ciphertext rotation operation by using a first data part corresponding to a first ciphertext level t in the evaluation key, wherein the first data part comprises only partial data of a single extended ciphertext.

2. The method according to claim 1, wherein a ciphertext item in the ciphertext data comprises L basic polynomials corresponding to L basic moduli, and a ciphertext item in the extended ciphertext comprises L first polynomials corresponding to the L basic moduli and K second polynomials corresponding to K auxiliary moduli; and
the partial data of the single extended ciphertext is L-t first polynomials and the K second polynomials, and a value of L-t is less than a preset threshold.

3. The method according to claim 2, wherein the target linear layer is a convolutional layer, an operation of the target linear layer consumes a 2-level ciphertext level, and the first ciphertext level t is set to cause L-t to be greater than or equal to 3.

4. The method according to claim 2, wherein an operation of the target linear layer consumes a 1-level ciphertext level, and the first ciphertext level t is set to cause L-t to be greater than or equal to 2.

5. The method according to claim 1, wherein the cryptographic processing comprises: performing a bootstrap operation after the target linear layer, wherein the bootstrap operation is to perform ciphertext level reduction processing by using a second data part corresponding to a second ciphertext level t in the evaluation key.

6. The method according to claim 5, wherein the key data comprises only a first data part used by each linear layer and a second data part used for the bootstrap operation.

7. The method according to claim 3, wherein a quantity K of auxiliary moduli is set to be equal to the preset threshold.

8. The method according to claim 1, wherein the cryptographic processing comprises: before the ciphertext rotation operation is performed, in response to that a ciphertext level inputted into the target linear layer is less than the first ciphertext level t, increasing the ciphertext level to the first ciphertext level t through a ciphertext level increasing operation.

9. The method according to claim 1, wherein before the cryptographic processing, the method further comprises:
determining ciphertext level consumption of each network layer in the cryptographic neural network; and
determining an inputted ciphertext level of each network layer and a position of the bootstrap operation under a target constraint based on the ciphertext level consumption, to cause an inputted ciphertext level of each linear layer to be greater than a preset level threshold, wherein the target constraint comprises that an outputted ciphertext level of each network layer is not greater than a highest ciphertext level.

10. An apparatus for model inference using a cryptographic neural network, wherein the cryptographic neural network comprises a plurality of linear layers, and the apparatus comprises:
a receiving unit, configured to receive ciphertext data and key data of a user, wherein the key data is partial data of an evaluation key of a target format, and the evaluation key of the target format comprises a plurality of extended ciphertexts; and
a cryptographic processing unit, configured to input the ciphertext data into the cryptographic neural network for cryptographic processing, wherein the cryptographic processing comprises: performing, at any target linear layer in the plurality of linear layers, a ciphertext rotation operation by using a first data part corresponding to a first ciphertext level t in the evaluation key, wherein the first data part comprises only partial data of a single extended ciphertext.

11. A computer-readable storage medium, storing a computer program, and when the computer program is executed in a computer, the computer program causing the computer to perform the method according to any one of claims 1 to 9.

12. A computing device, comprising a memory and a processor, the memory storing executable code, and the processor, when executing the executable code, implementing the method according to any one of claims 1 to 9.
